# EUROPEAN PATENT SPECIFICATION

(11) **EP 2 625 341 B1**
(45) Date of publication and mention of the grant of the patent: **15.04.2020**
(21) Application number: 10858209.9
(22) Date of filing: 04.10.2010
(51) Int. Cl.: E02B 7/00, E04H 9/14, E02B 7/44, E02B 3/10, E02B 7/54, E02B 7/20, E06B 9/00

(54) **A FLOODGATE**
SCHLEUSE
PORTE D'ÉCLUSE

(43) Date of publication of application: 14.08.2013
(73) Proprietor: Parafoil Design&Engineering Pte Ltd, Singapore 768441 (SG)
(72) Inventor: QUEK, Jwee, Thiam, Singapore 768441 (SG)
(74) Representative: Talbot-Ponsonby, Daniel Frederick
(86) International application number: PCT/SG2010/000376
(87) International publication number: WO 2012/047173

(56) References cited:
- GB-A- 2 465 005
- GB-A- 2 465 178
- GB-A- 191 323 479
- JP-A- H10 238 240
- JP-A- 2006 233 552
- US-A- 109 899
- US-A- 4 146 346
- US-A1- 2007 189 854

## Description

### Field of the invention

The present invention relates to a floodgate and a floodgate system comprising a plurality of floodgates.

### Background of the Invention

Hurricanes, typhoons, thunderstorms, tropical storms and torrential rain often lead to an increase in the rate of rainfall, an increase in the length of time the rainfall lasts and an increase in the total amount of rainfall. Many infrastructure flood control and land/mud slide prevention measures may not be effective against such increased rainfall. Although this may be overcome through infrastructure development (for example, infrastructure development to improve drainage of excess water), such development requires time and may not be sufficient or effective.

Floods caused by such increased rainfall often lead to a huge amount of damages, losses, disruptions and inconveniences. For example, a flood developed within an underground carpark due to an excessive amount of water entering the carpark often results in the damage of several cars. Furthermore, a flood developed within a shopping mall may necessitate the temporary closure of several shops, leading to monetary losses for these shops.

A floodgate (or flood barrier) serves as a quick and effective measure against any potential damage caused by floods. In particular, the floodgate acts as a barrier to prevent water from getting into an infrastructure (for example, a building or an underground carpark). This may serve as a temporary solution while infrastructure development to improve the drainage system is being carried out.

Most of the currently available floodgates are activated either manually or with the use of electricity. Manually activated floodgates often require at least one designated person to be on site at all times. Otherwise, there is a risk that the floodgate cannot be activated in time. For floodgates which are activated using electricity, there is a risk that electrical supply may be cut off during times of heavy rain, preventing these floodgates from being activated. If the gap which is closed by the floodgate is long, the designated person also has to install vertical posts to support the panels. This may be time consuming and labour intensive depending of the size of the area to be protected against flood waters.

US patent US6,623,209 discloses a floodgate which can be automatically activated without using electricity. This floodgate works under the action of water pressure. In particular, during times of increased rainfall, surface water enters a portal below a panel of the floodgate and pivotingly buoys the panel upwards. Singapore patent application 9800143-1 discloses a floodgate which works using the same principles. Although these floodgates are activated without using electricity, the portal below the panel of the floodgate needs to be deep so that enough water can enter the portal to generate a force sufficient to raise the panel. If the panel is vehicular trafficable, the portal needs to be even deeper since such a panel is usually heavier. The costs for such systems are therefore high, as is the cost of the extensive construction work required to install them. JP10-238240 A describes a floodgate according to the features of the preamble of the subject-matter of claim 1.

### Summary of the invention

The present invention aims to provide a new floodgate according to claim 1.

A gas strut is a set of elongate members (usually two members) which are relatively slidable (e.g. by a telescoping motion) between a compressed configuration and an extended configuration. The gas strut includes a trapped amount of gas which is compressed in the compressed configuration and urges the gas strut into the extended configuration. It is advantageous to use gas struts to move the panel from the closed position to the opened position in the floodgate. Unlike hydraulic pumps which require motor pump oil and power supply, gas struts can be operated without the use of electrical power supply. Furthermore, no external air pump is required to operate a gas strut. This is advantageous over pneumatic cylinders which require an external air compressor. In highly humid areas, a large amount of condensate forms in a pneumatic cylinder. The mixture of this condensate with lubrication oil existing in the pneumatic cylinder can often damage the cylinder. Furthermore, pneumatic cylinders employ paper gaskets which may also be damaged by the condensate.

Further aspects and preferred features are set out in claim 2 *et seq.*

### Brief Description of the Figures

An embodiment of the invention will now be illustrated for the sake of example only with reference to the following drawings, in which:
Fig. 1(a)-(b) illustrate perspective views of a floodgate according to a first embodiment of the present invention;
Figs. 2(a) -2(d) respectively illustrate a top view, side view, front view and sectional view of the floodgate of Fig. 1.
Fig. 3 illustrates a cross-sectional side view of the floodgate of Fig. 1 when the floodgate of Fig. 1 is deactivated;
Fig. 4 illustrates a magnified view of a first portion of the cross-sectional side view of Fig. 3;
Fig. 5 illustrates a magnified view of a second portion of the cross-sectional side view of Fig. 3;
Fig. 6 illustrates a cross-sectional side view of the floodgate of Fig. 1 when the floodgate of Fig. 1 is activated;
Fig. 7 illustrates a magnified view of a portion of the cross-sectional side view of Fig. 6;
Fig. 8 illustrates a perspective view of a hinge and a perspective view of a bracket arranged with a portion of a tubular drive in the floodgate of Fig. 1;
Fig. 9(a) illustrates a cutaway perspective view of the floodgate of Fig. 1 showing the arrangement between the hinge and the bracket of Fig. 8 whereas Fig. 9(b) illustrates a magnified view of a portion of the perspective view of Fig. 9(a);
Figs. 10(a) and (b) illustrate a second embodiment of the invention;
Fig. 11 illustrates perspective views of a floodgate which is a third embodiment of the invention;
Fig. 12 illustrates a cross-sectional side view of the floodgate of Fig. 11 when the floodgate of Fig. 11 is deactivated;
Fig. 13 illustrates a cross-sectional side view of the floodgate of Fig.11 when the floodgate of Fig. 11 is activated;
Figs. 14(a) and 14(b) illustrate perspective views of a floodgate system 1300 comprising a plurality of floodgates arranged along a straight line;
Fig. 15(a) illustrates a cross-sectional view of a part of the floodgate system of Figs. 14(a) and 14(b) whereas Fig. 15(b) illustrates magnified views of parts of the cross-sectional view of Fig. 15(a);
Figs. 16(a) and 16(b) illustrate perspective views of a floodgate system comprising a plurality of floodgates arranged in a U-shaped manner;
Figs. 17(a) and 17(b) illustrate perspective views of a floodgate system comprising a plurality of floodgates arranged in a faceted manner.

### Detailed Description of the Embodiments

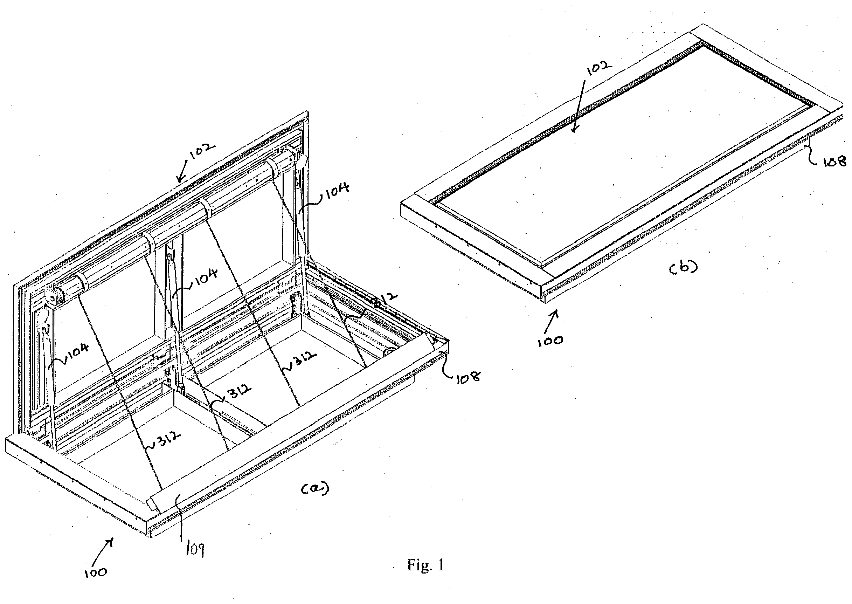

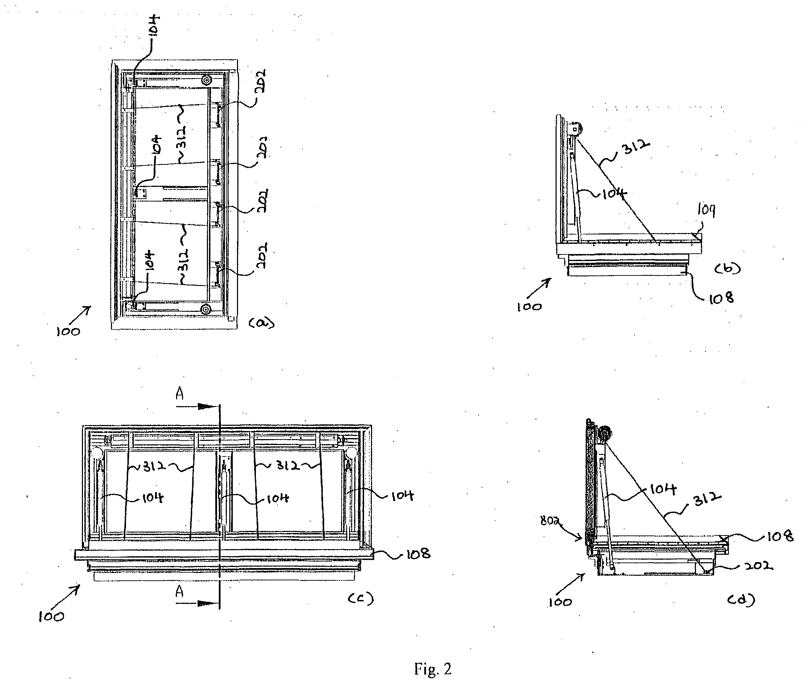

Fig. 1 illustrates perspective views of a floodgate 100 according to an embodiment of the present invention. Fig. 1(a) illustrates the floodgate 100 when the floodgate 100 is activated whereas Fig. 1(b) illustrates the floodgate 100 when the floodgate 100 is deactivated. Figs. 2(a) -2(d) respectively illustrate a top view, side view, front view and a sectional view of the floodgate 100 when the floodgate 100 is activated. The sectional view of Fig. 2(d) is in the plane marked A-A in Fig. 2(c). The floodgate 100 is also referred to as an Automatic Flood Barrier System (AFBS).

As shown in Figs. 1 and 2, the floodgate 100 comprises a panel 102 and a plurality of extendable members in the form of gas struts 104, a plurality of rotatable drives in the form of tubular drives 202 and a base frame 108 for holding the panel 102.

The panel 102 is configured to be movable about hinges 802 (described below) between an opened position and a closed position. When the floodgate 100 is activated as shown in Fig. 1(a), the panel 102 is in the opened position to form a barrier against floodwater. When the floodgate 100 is deactivated as shown in Fig. 1(b), the panel 102 is locked in the closed position and is human and vehicular trafficable. In other words, the panel 102 is configured to withstand a weight of expected traffic over it when it is in the closed position. This traffic may be from pedestrians and/or automobiles. In fact, for installation in a road, the panel must be able to bear the weight of the heaviest vehicle which is likely to pass along the road (e.g. an articulated lorry), which implies being able to bear at least one metric ton, and preferably significantly more, such as at least 5 metric tons or at least 10 metric tons.

Each gas strut 104 is configured to move the panel 102 from the closed position to the opened position. Each gas strut 104 comprises a first portion in the form of a piston and a second portion in the form of a cylinder. The cylinder is filled with gas (for example, nitrogen gas) and the piston is movable within the cylinder. The length of each gas strut 104 is variable between a minimum length and a maximum length via the movement of the piston within the cylinder. When the panel 102 is locked in the closed position i.e. when the floodgate 100 is deactivated, each gas strut 104 is at the minimum length and the gas in the cylinder of each gas strut 104 is pressurized. This pressure results in a force exerted against the locked panel 102.

When the floodgate 100 is activated, the panel 102 is unlocked and the force exerted against the panel 102 by each gas strut 104 pushes against the panel 102, moving the panel 102 to the opened position as shown in Fig. 1(a). The tubular drive 202 is configured to rotate freely with this movement of the panel 102. The required magnitude of the force exerted by each gas strut 104 on the panel 102, and thus the required pressure of the gas in the cylinder of each gas strut 104 when the panel 102 is in the closed position, depends on the weight of the panel 102. Although a stronger panel 102 can withstand a higher weight of traffic over it and a higher force from the floodwater against it, a stronger panel 102 is usually heavier and a greater force is usually required to lift the panel 102 from the closed position to the opened position. In one example, each gas strut 104 is selected such that the combined force the gas struts 104 exert on the panel 102 is equal to the expected force from the floodwater against the panel 102 during a typical flood. In one example, each gas strut 104 is a Bansbach gas strut.

Each gas strut 104 further comprises a dampening mechanism. This dampening mechanism is configured to reduce the rate at which the gas strut 104 moves the panel 102 from a predetermined position to the closed position whereby the predetermined position lies between the closed position and the opened position. This cushions and slows down the final opening of the panel 102. The reduction in the rate at which the gas strut 104 moves the panel 102 is adjustable. In one example, the dampening mechanism employs oil dampening using a body of oil within the gas strut 104 which is acted on as the gas strut 104 expands, and the reduction in the rate of movement of the panel depends on the amount of oil employed by the dampening mechanism. Alternatively, the dampening mechanism may employ other types of dampening, for example torsion spring dampening.

The tubular drives 202 are arranged with the panel 102 such that the panel 102 moves with a rotation of the tubular drives 202 from the opened position to the closed position. In the configuration shown the tubular drives 202 are mounted on the panel 102, and connected to the base frame 108 via ropes 312 (but alternative arrangements are possible in which the tubular drives 202 are mounted to the base frame 108 and connected to the panel 102 via ropes) To deactivate the floodgate 100, the tubular drives 202 are turned on. This starts the rotation of the tubular drives 202 and a force is exerted on the panel 102 via ropes 312 (described below) against the force from the gas struts 104 to move the panel 102 from the opened position to the closed position. Two mechanical limit switches are present in each tubular drive 202. Each of these switches can be calibrated independently using screws on the tubular drive 202 and serve to stop the rotation of the tubular drive 202 after the panel 102 has reached the opened or closed position. In one example, each tubular drive 202 is a weatherproof tubular drive which when turned on, has an average internal rotational speed of about 2000rpm, and an internal gear mechanism to reduce this rotational speed, and thereby rotate an external surface of the drive at a rotational speed of about 11rpm, the external surface being coupled to a rope 312 for moving the panel 102. The weight/force in which the tubular drive is able to pull is between 120kg to 500kg.

Each tubular drive 202 also comprises a centrifugal brake. The centrifugal brake is configured to exert a force against the rotation of the tubular drive 202 when a speed of the rotation exceeds a predetermined threshold. In one example, each tubular drive 202 further comprises a tubular drive tube and the centrifugal brake in each tubular drive 202 further comprises brake pads extendable from a main body of the centrifugal brake. When the speed of rotation of the tubular drive 202 exceeds the predetermined threshold, the brake pads extend from the main body of the centrifugal brake and exert an opposing frictional force against a surface of the tubular drive tube. This slows down the rotational speed of the tubular drive 202 and may even stop the rotation of the tubular drive 202 completely. However, usually in a split second of time after the rotational speed of the tubular drive 202 decreases, the brake pads are retracted via resilient elements attached between the brake pads and the main body of the centrifugal brake. These resilient elements may be springs. This removes the opposing frictional force exerted against the surface of the tubular drive tube and the rotational speed of the tubular drive 202 increases.

If the force exerted by the gas strut 104 on the panel 102 is too strong, the speed at which the panel 102 moves from the closed position to the opened position may be too high and this speed may continue increasing throughout the movement of the panel 102 due to the momentum of the movement. Such an abrupt opening of the panel 102 may result in a toppling of the base frame 108 from its installed position when the panel 102 reaches the opened position. Similarly, an abrupt closing of the panel 102 may also damage the floodgate 100. The presence of the centrifugal brake in each tubular drive 202 is advantageous as this helps to limit the speed of rotation of the tubular drive 202. This in turn limits the speed at which the panel 102 moves due to the coupling between the tubular drive 202 and the panel 102.

The floodgate 100 further comprises a plurality of locking members whereby each locking member is integrally formed with a tubular drive 202. Each locking member is configured to be switchable between a locked state and an unlocked state. In the locked state, the locking members lock the panel 102 in the closed position whereas when the locking members are in the unlocked state, the panel 102 moves from the closed position to the opened position due to the force exerted by the gas struts 104. To activate the floodgate 100, the locking members are deactivated i.e. switched from the locked state to the unlocked state. In one example, each locking member is an energized electromagnetic lock (which may be a 24V DC electromagnet) and is deactivated by disrupting the power supply to the locking member.

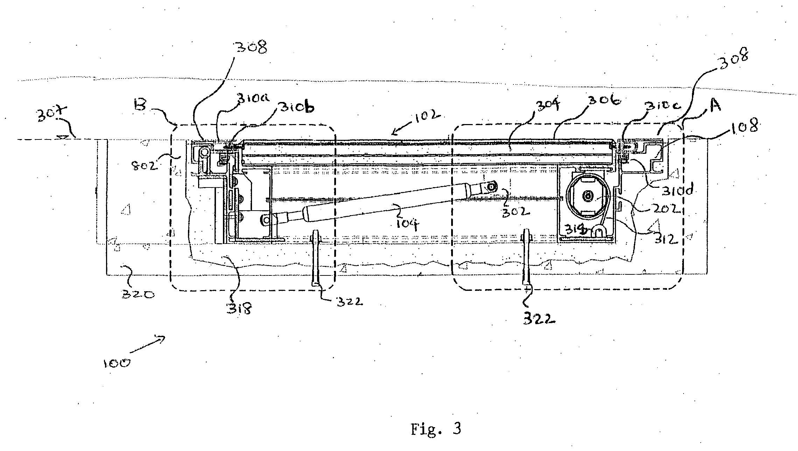

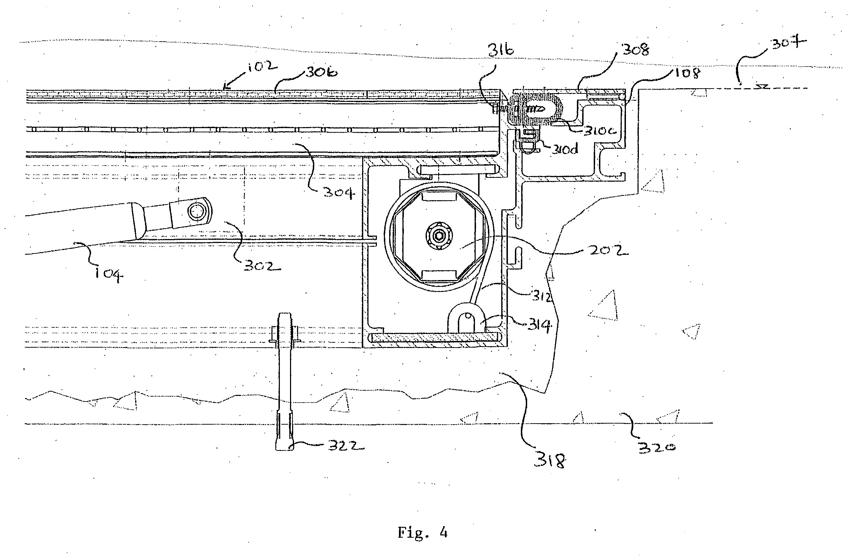

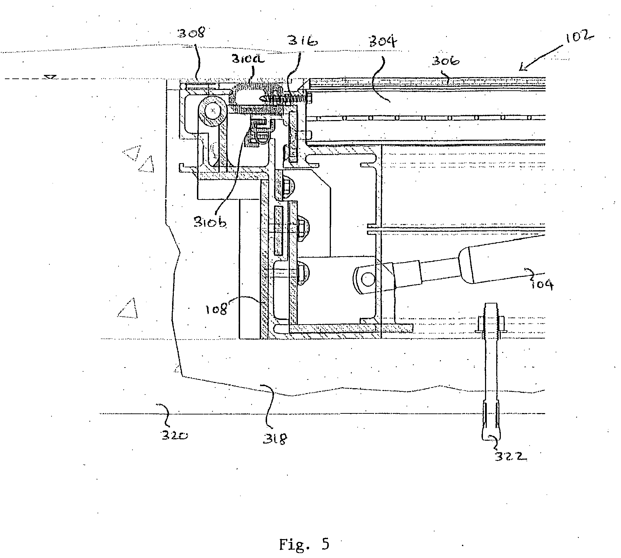

Fig. 3 illustrates a cross-sectional side view of the floodgate 100 when the floodgate 100 is deactivated i.e. when the panel 102 is in the closed position. Fig. 4 illustrates a magnified view of a first portion of the cross-sectional side view in Fig. 3 (see DETAIL A) whereas Fig. 5 illustrates a magnified view of a second portion of the cross-sectional side view in Fig. 3 (see DETAIL B).

As shown in Figs. 3 - 5, the panel 102 comprises an extruded aluminium sash frame 302, an intermediate layer 304 and an upper layer 306. In one example, the combined weight of the sash frame 302, the intermediate layer 304 and the upper layer 306 is approximately 200 to 250 kg per square meter.

The intermediate layer 304 is arranged between the sash frame 302 and the upper layer 306. This intermediate layer 304 serves to strengthen the panel 102 such that the panel 102 is strong enough to withstand the weight of expected traffic over it when it is in the closed position and the force of floodwater against it when it is in the opened position. In one example as shown in Figs. 3 to 5, the intermediate layer 304 is filled with a layer of grout comprising for example, sand and cement and a galvanised wire mesh is integrated within the layer of grout. Alternatively, the intermediate layer 304 may be filled with aluminium plates, steel plates, mineral fibre insulation, sand alone, cement alone, boards or concrete.

The upper layer 306 is finished with a material selected to match the surface of the ground area around the panel 102 in the closed position. This material may be tile or stone. This allows the panel 102 to blend in with the surrounding ground surface 307. Besides this aesthetic function, the upper layer 306 also serves as a first layer of protection for the interior of the floodgate 100.

In one example, the sash frame 302 and the base frame 108 are made of Grade AA6063 T5 profiled aluminium extrusions of appropriate thickness for structure steadfastness. These aluminium extrusions are chamfered, welded and sand-smoothed. The welded aluminium extrusions are powder coated using a non-metallic colour to prevent corrosion. Hot dip galvanized steel may be added to reinforce the aluminium extrusions.

As shown in Figs. 3 - 5, the floodgate 100 also comprises protective cover plates 308 to prevent water or any external object from entering the interior of the floodgate 100 when the floodgate 100 is deactivated. The floodgate 100 further comprises a plurality of seals 310a, 310b, 310c, 310d. When the floodgate 100 is deactivated, these seals 310a - 310d serve as additional barriers to prevent water or any external object from entering the interior of the floodgate 100. Preferably, these seals 310a - 310d are EDPM gaskets as EDPM gaskets are UV resistant and have a low sinkage rate.

As shown in Figs. 3 - 5, the floodgate 100 further comprises a plurality of screws for example, self-tap screws 316 for holding together different components of the floodgate 100. The floodgate 100 also comprises lifting handles (not shown in Figs. 3 - 5) which are recessed into the panel 102 allowing the panel 102 to be manually lifted from the closed position to the opened position. This is useful in the event that the gas strut 104 fails to operate.

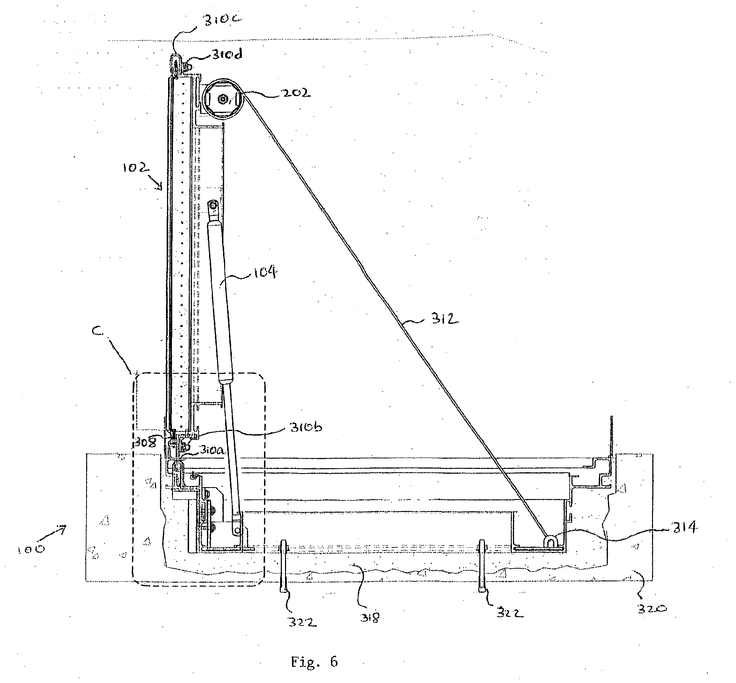

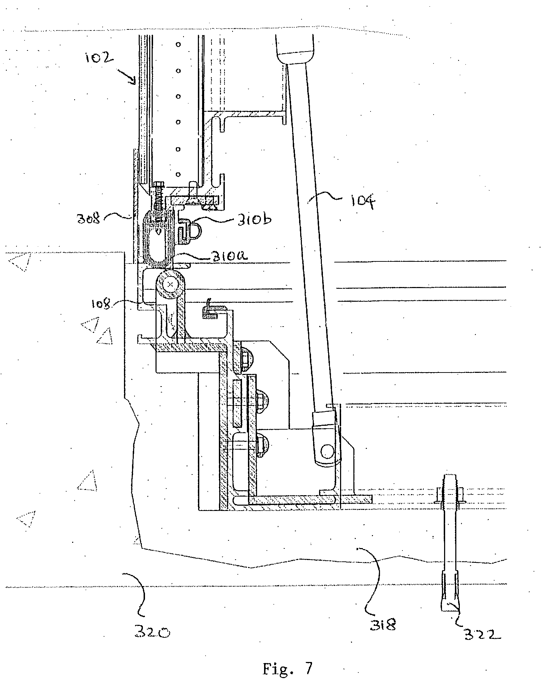

Fig. 6 illustrates a cross-sectional side view of the floodgate 100 when the floodgate 100 is activated i.e. when the panel 102 is in the opened position. Fig. 7 illustrates a magnified view of a portion of the cross-sectional side view in Fig. 6 (see DETAIL C).

As shown in Figs. 6 - 7, when the panel 102 is in the opened position, the seal 310a presses against the base frame 108 to form a continuous barrier with the panel 102 against floodwater. Furthermore, the protective cover plates 308 are pressed against the panel 102 to provide further protection against floodwater. The floodgate 100 further comprises a plurality of sealing elements (not shown in Figs. 3 - 7) which are configured to fill gaps between the panel 102 and surrounding walls or vertical posts such that a continuous barrier against floodwater is formed by the sealing elements and the panel 102 when the panel 102 is in the opened position. These sealing elements are preferably EDPM gaskets as EDPM gaskets are UV resistant and have a low sinkage rate.

As shown in Figs. 3 - 7, each tubular drive 202 is coupled to the panel 102, and connected to the base frame 108 via a rope 312 and a horseshoe saddle 314. The rope 312 may be a stainless steel wire rope. One end of the rope 312 is coiled around the tubular drive 202 whereas the other end of the rope 312 is connected to the horseshoe saddle 314 which is in turn connected to the base frame 108. When the panel 102 moves from the closed position to the opened position, the end of the rope 312 connected to the horseshoe saddle 314 is pulled away from the tubular drive 202. Thus, the rope 312 uncoils from the tubular drive 202, rotating the tubular drive 202 with the movement of the panel 102. When the tubular drive 202 is turned on, the tubular drive 202 rotates' in a direction coiling the rope 312 around itself. This pulls the horseshoe saddle 314 (and thus, the panel 102) towards the tubular drive 202, hence moving the panel 102 from the opened position to the closed position. The horseshoe saddles 312 are covered by a "piano lid flap" 109, which folds down into a horizontal configuration in the closed position of the panel 102, but is inclined in the open position of the panel 102 (as shown in Fig. 1(a)).

In one example as shown in Figs. 1 - 2, the floodgate 100 comprises four tubular drives 202 and each tubular drive 202 is configured to exert a force on the panel 102 to move the panel 102 from the opened position to the closed position. The force exerted by each tubular drive 202 at a point a distance away from a first end of the panel 102 is equal to the force exerted by a different tubular drive 202 at a point the same distance away from a second end of the panel 102 opposite the first end. This is achieved by placing two ropes 312 through the panel 102. The ends of one of these ropes 312 are coiled around the outer tubular drives 202 (i.e. tubular drives 202 nearer the edges of the panel 102) whereas the ends of the other rope 312 are coiled around the inner tubular drives 202.

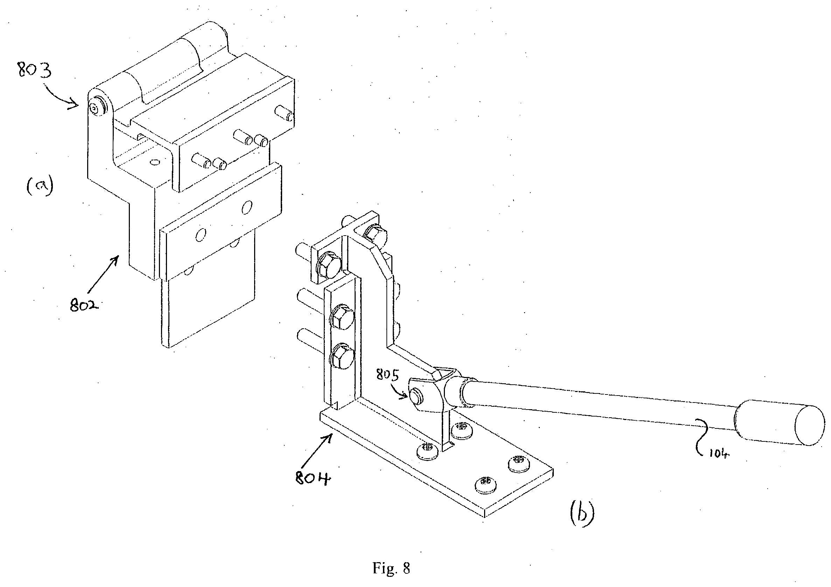

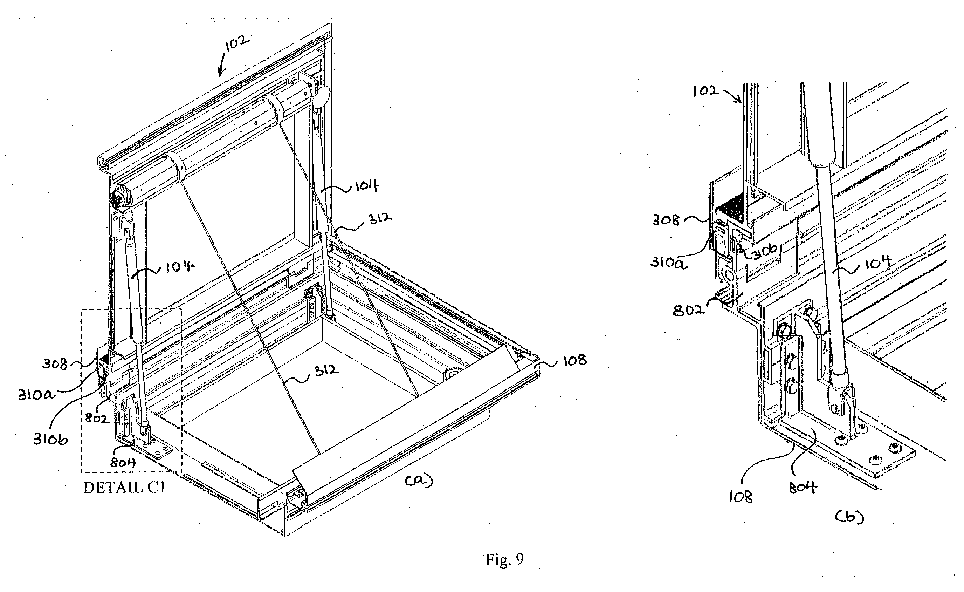

The floodgate 100 further comprises a plurality of hinges 802 and brackets 804. Fig. 8(a) illustrates a perspective view of a hinge 802, and Fig. 8(b) illustrates a perspective view of a bracket 804 arranged with a portion of the gas strut 104. The hinge 802 includes an elongate hinge pin 803 having a central axis which is the hinge axis of the hinge 802. The gas strut 104 is connected to the bracket 804 by a pivot 805. Fig. 9(a) illustrates a cutaway perspective view of the floodgate 100 showing the arrangement between each hinge 802 and each bracket 804 whereas Fig. 9(b) illustrates a magnified view of a portion of the perspective view in Fig. 9(a) (see DETAIL C1). In one example, the hinge 802 is made of chamfer-welded stainless steel to Grade SUS 304 or SUS 316.

As shown in Figs. 9(a) and 9(b), the bracket 804 serves to secure the gas strut 104 to the base frame 108. The bracket 804 is further arranged with the hinge 802 in a unique manner which reduces the amount of force required from the gas strut 104 to move the panel 102 from the closed position to the opened position. This is elaborated as follows.

When the panel 102 moves, the weight of the panel 102 is supported not only by the gas struts 104 but also by the hinges 802. In other words, the weight of the panel 102 is distributed between the gas struts 104 and the hinges 802. Hence, gas struts 104 which are not strong enough on their own to bear the weight load of the panel 102 can be used and no additional hand-lifting force is required before the combined force from the gas struts 104 is sufficient to move the panel 102. Since the force required from each gas strut 104 is lower, the minimum angle between each gas strut 104 and the panel 102 can be reduced (i.e. the component of the length direction of the gas strut 104 which lies in the direction perpendicular to the panel - which is proportional to the component of the force exerted by the gas strut which acts to rotate the panel about the hinge - can be reduced) compared to a situation in which the gas strut 104 bears the whole weight of the panel 102. In other words, the vertical distance which the fixed end of the gas strut 104 lies beneath the axis of the hinge 802 is reduced. Thus, the depth of the floodgate 100 required for holding the entire gas strut 104 can be reduced. This in turn means that the ground need not be evacuated too deeply to install the floodgate 100.

Note that the expansive force which the gas strut 104 generates decreases with an increasing length of the gas strut 104. Due to the reduced angle between the gas strut 104 and the panel 102 when the panel 102 is in the closed position, the length of the gas strut 104 when the panel 102 is in the opened position is reduced. This allows a greater force to be exerted on the panel 102 against the impact of floodwater when the panel 102 is in the opened position.

Furthermore, as shown in Figs. 9(a) and 9(b), each hinge 802 and bracket 804 are arranged such that they act against each other. Since the bracket 804 and hinge 802 are connected via the base frame 108 and maintained in a constant positional relationship, much less force is transmitted to the ground than would be the case if the bracket 804 and hinge 802 were individually fixed to the ground. Furthermore, when the panel 102 moves, the force the panel 102 exerts on the hinge 802 and is to some extent balanced by an opposing force exerted by the bracket 804. This buffers the base frame 108 from the weight of the panel 102 when the panel 102 is moving. Thus, the base frame 108 simply needs to support the dead load of the panel 102 as if the panel 102 were stationary (either in the opened or closed position) and not the dynamic load of the panel 102 when the panel 102 is moving.

In one example, for a panel 102 of weight 350kg, without the hinge 802 and bracket 804 assembly, the gas strut 104 would need to exert a force of 1500kg to move the panel 102 from the closed position to the opened position and a depth of more than 300mm below the hinge point is required to hold the gas strut 104. However, with the hinge 802 and bracket 804 assembly, a force of only 750kg and a depth of only approximately 150mm is required.

In one example, each gas strut 104 is arranged with the panel 102 such that when the panel 102 is in the closed position, a first end of the gas strut 104 lies substantially directly below an end of the panel 102 and a second end of the gas strut 104 opposite the first end lies directly below a point on the panel 102 which is two-thirds of the length of the panel 102 from the end of the panel 102. This arrangement is advantageous as the weight of the panel 102 can contribute substantially to the total force against the gas strut 104 to move the panel 102 from the opened position to the closed position. However, even in this arrangement, due to the above-mentioned hinge 802 and bracket 804 assembly, the gas strut 104 is still able to exert a sufficient force to move the panel 102 from the closed position to the opened position without increasing the angle between the gas strut 104 and the panel 102 when the panel 102 is in the closed position A further advantage of using the weight of the panel 102 ton contribute to the force against the gas struts 104 is that the pulling force and/or load the tubular drive 202 needs to lift/pull is much lesser than the total force generated by the gas struts 104, and does not need to match the total force of the gas struts 104.

The floodgate 100 is installed into the ground area as shown in Figs. 3 - 7. The ground area may be in front of an aperture, opening or doorway of a premise to be protected against floods. The floodgate 100 is arranged with the aperture, opening or doorway such that the panel 102 is perpendicular to the aperture, opening or doorway when it is in the closed position. In this way, when the panel 102 is in its opened position, it forms a barrier blocking the aperture, opening or doorway of the premise to be protected. In other words, the panel 102 adopts the position of a single or double leaf door against intruding floodwater.

To install the floodgate 100, a part of the ground area is first evacuated (or hacked) to create a sufficient depth for the floodgate 100 such that the upper layer 306 of the panel 102 is level with the surface of the surrounding ground area after the floodgate 100 is installed. As shown in Figs. 3 - 7, grout 318 is placed between the floodgate 100 and the surrounding ground area 320. This provides support for the base frame 108 of the floodgate 100 so as to minimize the sinking of the floodgate 100 into the ground over time. Furthermore, a plurality of anchors 322 are used to anchor the floodgate 100 to the grout 318 and the surrounding ground area 320. In one example, the grout 318 comprises make-up cement grout.

When the floodgate 100 is activated and the panel 102 is in its opened position, a brace for example, a steel cross brace may be manually propped against the panel 102 to increase the resistance of the panel 102 against the hydrostatic and hydrodynamic forces caused by the impact of floodwater or other objects (for example, load in the debris carried by the floodwater).

The floodgate 100 is configured such that it is activated in response to a signal from a sensor for sensing an imminent flood and deactivated using a key switch control or a reset button at a control panel. The sensor may work by detecting the level of water above the ground in which the floodgate 100 is installed. Alternatively, the floodgate 100 may be manually activated by deactivating the locking members using a key switch control or a push button. The floodgate 100 may also be activated by manually lifting the panel 102 against the force exerted by the locking members.

The floodgate 100 is coupled to a battery backup system (for example a UPS system). This serves to provide backup power to the floodgate 100 in the event of a power failure (failure of the mains in-coming power supply) which may deactivate the locking members causing the panel 102 to move from the closed position to the opened position even in the absence of an imminent flood. The battery backup system may be selected to provide backup power for 1 hour, 2 hours, 4 hours, 8 hours or any other number of hours depending on the user's requirements. The locking members are configured such that in the event that the floodgate 100 is activated when the battery backup system is being used, the locking members will still be deactivated. The floodgate system 100 may be further coupled to a drainage system to drain any water that enters the interior of the floodgate 100.

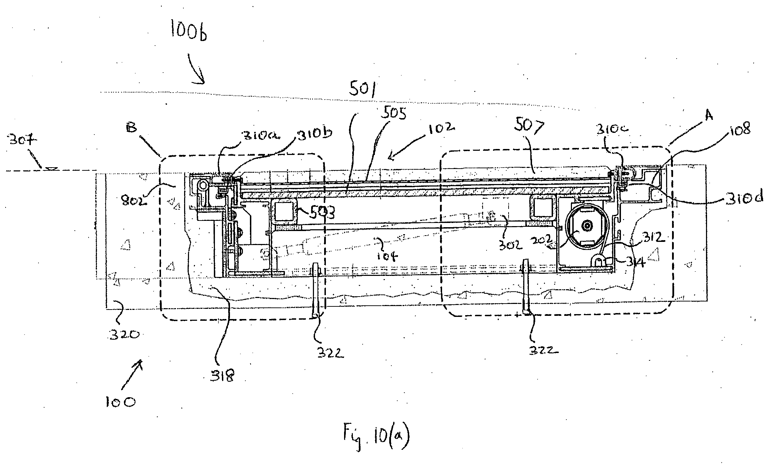

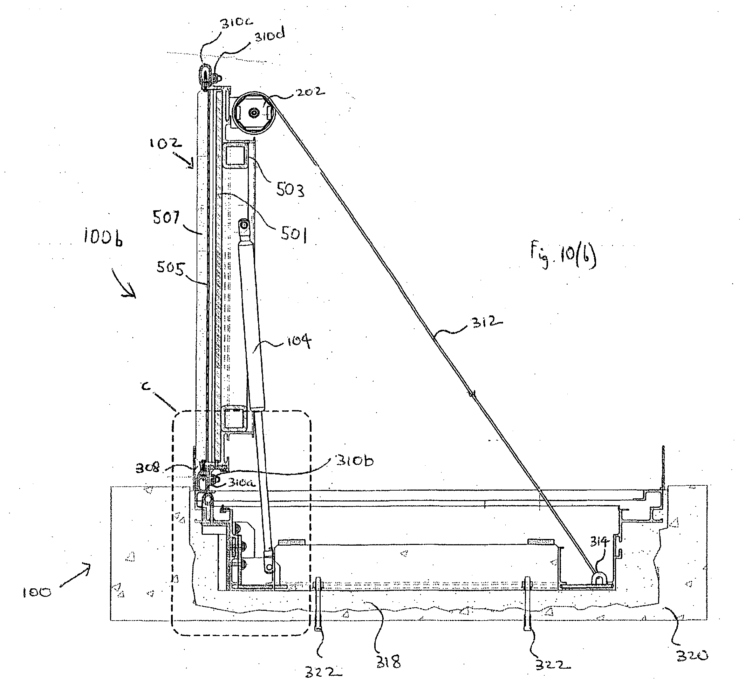

Fig. 10(a) and (b) are views of a floodgate 100b which is a variation of the floodgate 100, and which is a second embodiment of the invention. Fig. 10(a) illustrates the floodgate 100b when the floodgate 100b is activated, whereas Fig. 10(b) illustrates the floodgate 100b when the floodgate 100b is deactivated. The floodgate 100b has a construction very similar to the floodgate 100, so like elements are given the same reference numerals. In contrast to the floodgate 100, the floodgate 100b has a steel frame 503 supporting a steel plate 501, on which are formed a wire mesh 505 and a top layer 507 which may be concrete, tile or stone. The steel plate 501 and frame 503 give the floodgate 100b additional strength to support a vehicle passing over the floodgate 100b when the floodgate 100b is deactivated.

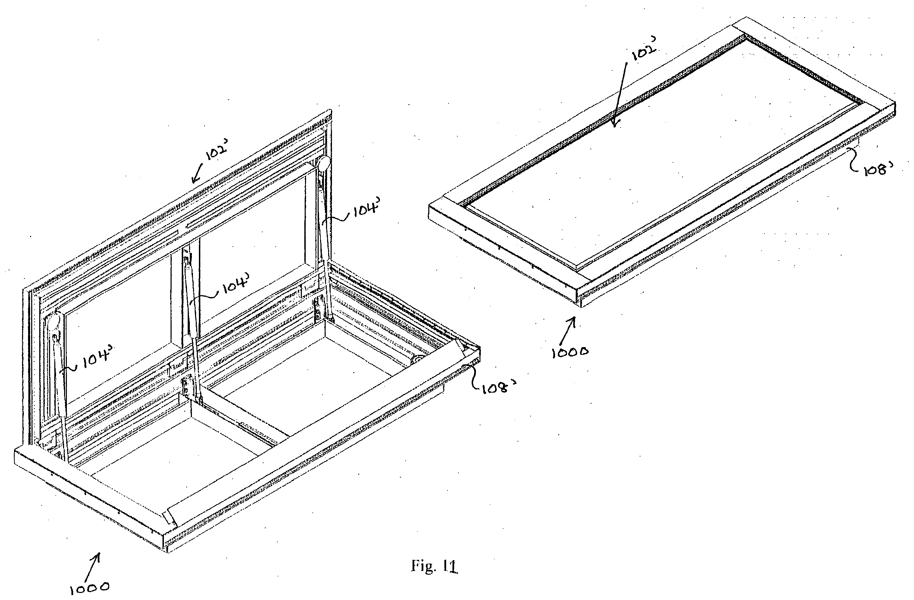

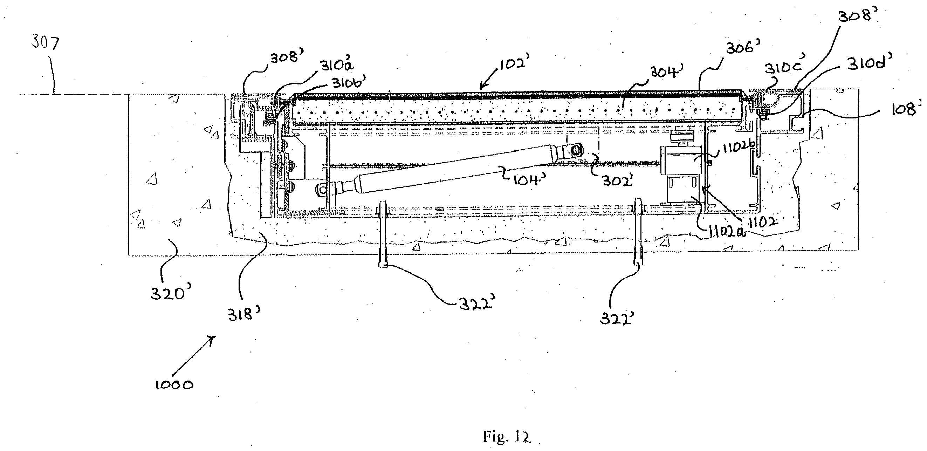

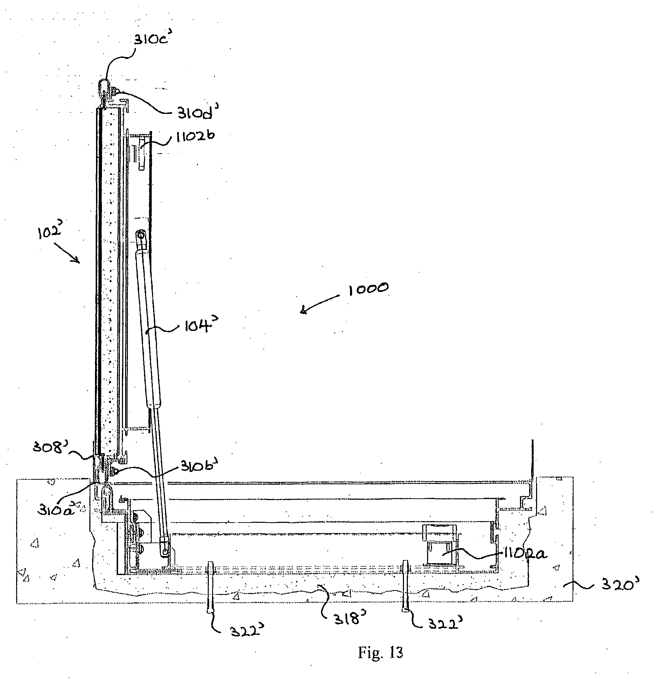

Fig. 11 illustrates perspective views of a floodgate 1000 which is another variation of the floodgate 100 and which is a third embodiment of the invention. Fig. 11(a) illustrates the floodgate 1000 when the floodgate 1000 is activated whereas Fig. 11(b) illustrates the floodgate 1000 when the floodgate 1000 is deactivated. Figs. 12 and 13 respectively illustrate a cross-sectional side view of the floodgate 1000 when the floodgate 1000 is deactivated and a cross-sectional side view of the floodgate 1000 when the floodgate 1000 is activated. The floodgate 1000 is similar to the floodgate 100 and thus, the same parts will have the same reference numerals with the addition of prime.

The floodgate 1000 works in the same manner as the floodgates 100, 100b. However, unlike the floodgates 100, 100b which comprise a plurality of tubular drives 202, each with an integrated locking member, the floodgate 1000 comprises a plurality of standalone locking members in the form of electromagnetic locks 1102 (see Figs. 12 and 13). Each electromagnetic lock 1102 comprises a first part in the form of an armature plate 1102b and a second part in the form of a magnetic coil 1102a. Each electromagnetic lock 1102 serves the same function as the electromagnetic lock integrated with each tubular drive 202 in the floodgate 100. Similarly, each electromagnetic lock 1102 is configured to be switchable between a locked state and an unlocked state such that when the electromagnetic locks 1102 are in the locked state, the electromagnetic locks 1102 lock the panel 102' in the closed position and when the electromagnetic locks 1102 are in the unlocked state, the panel 102' moves from the closed position to the opened position. For each electromagnetic lock 1102, the armature plate 1102b and the magnetic coil 1102a press against each other in the locked state (as shown in Fig. 12) whereas the magnetic coil 1102a and the armature plate 1102b are separated from each other in the unlocked state (as shown in Fig. 13).

To deactivate the floodgate 1000, the panel 102' is moved from the opened position to the closed position manually. This is performed by exerting a force on the panel 102' against the force from the gas struts 104'. Even though the floodgate 1000 does not comprise tubular drives with centrifugal brakes, the speed at which the panel 102' moves from the closed position to the opened position is still controlled due to the dampening mechanism in the gas strut 104' similar to that in the gas strut 104 as mentioned above.

As shown in Figs. 12 - 13, the floodgate 1000 is installed in the same manner as the floodgate 100 described above. Furthermore, when the floodgate 1000 is activated and the panel 102' is in its opened position, a brace for example, a steel cross brace may be manually propped against the panel 102'. The floodgate 1000 is also configured such that it is activated in the same way as the floodgates 100 and 100b and is also coupled to a battery backup system.

The following describes an example process of manually activating the floodgate 100, 100b or 1000 and an example process of automatically activating the floodgate 100, 100b or 1000.

### Example process of manually activating the floodgate 100, 100b or 1000

The floodgate 100, 100b or 1000 is normally deactivated with the panel 102 or 102' locked in the closed position. In this example, the floodgate 100, 100b or 1000 is coupled to a manual control unit such as a key switch control or a push button and needs to be manually activated using this manual control unit.

Upon activation of the manual control unit by for example turning the key switch control or pressing the push button, an audio and visual alarm system is activated to broadcast a warning that the floodgate 100, 100b or 1000 is about to be activated. A voice sounder will continuously broadcast a pre-recorded message while a beacon continuously flashes. After a predetermined amount of time from the activation of the manual control unit, the power supply to the locking members in the floodgate 100, 100b or 1000 is disrupted, thus unlocking the panel 102 or 102'. The force exerted by the gas strut 104 or 104' then moves the panel 102 or 102' from the closed position to the opened position at a controlled speed.

### Example process of automatically activating the floodgates 100, 100b. 1000

The floodgate 100, 100b or 1000 is normally deactivated with the panel 102 or 102' locked in the closed position. In this example, the floodgate 100, 100b or 1000 is coupled to one or more conductive level controllers which serve to detect the level of water around the premise to be protected.

When the level of water reaches a first threshold, an audio and visual alarm is activated to provide a warning that a flood may occur. A voice sound continuously broadcasts a pre-recorded message while a beacon continuously flashes.

If the level of water then subsides below the first threshold, the audio and visual warning is discontinued after a predetermined period of time. In this example, a pre-set timer control is used to prevent intermittent activation and deactivation of the audio and visual warning.

If the level of water continues to rise and reaches a second threshold, the floodgate 100, 100b or 1000 is activated by for example, disrupting the power supply to the locking members of the floodgate 100, 100b or 1000, hence unlocking the panel 102 or 102'. The force exerted by the respective gas struts 104 or 104' then moves the panel 102 or 102' from the closed position to the opened position at a controlled speed. If the level of water reaches a second threshold, a second pre-recorded message is activated to warn of impending opening of the floodgate. After a pre-determined time, the floodgate opens.

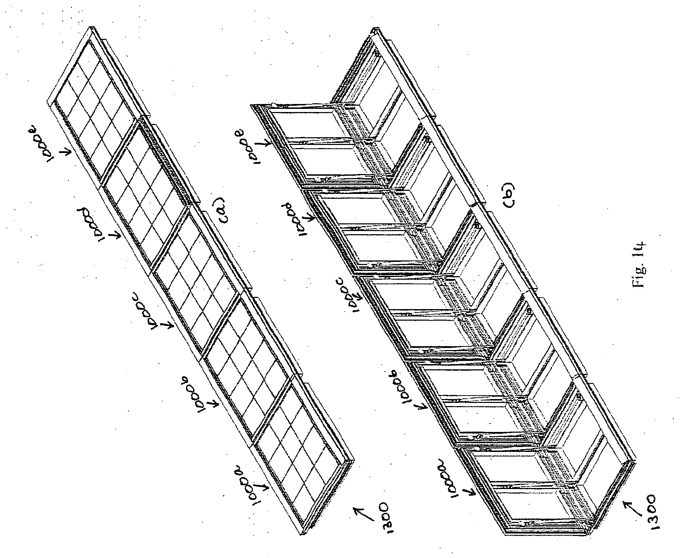

Figs. 14 - 17 illustrate floodgate systems with each floodgate system comprising a plurality of floodgates (floodgates 100 and/or floodgates 100b, and/or floodgates 1000) in a different configuration.

Figs. 14(a) and 14(b) illustrate perspective views of a floodgate system 1300 comprising a plurality of floodgates 1000a - 1000e arranged along a straight line. Fig. 14(a) illustrates the floodgate system 1300 when the floodgate system 1300 is deactivated whereas Fig. 14(b) illustrates the floodgate system 1300 when the floodgate system 1300 is activated.

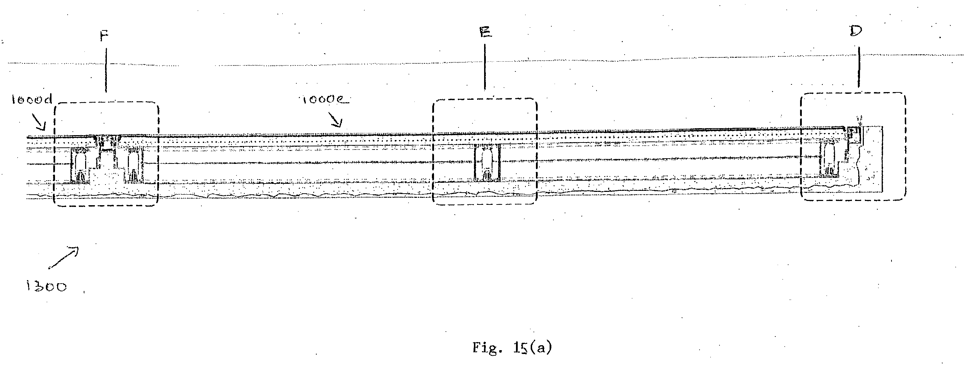

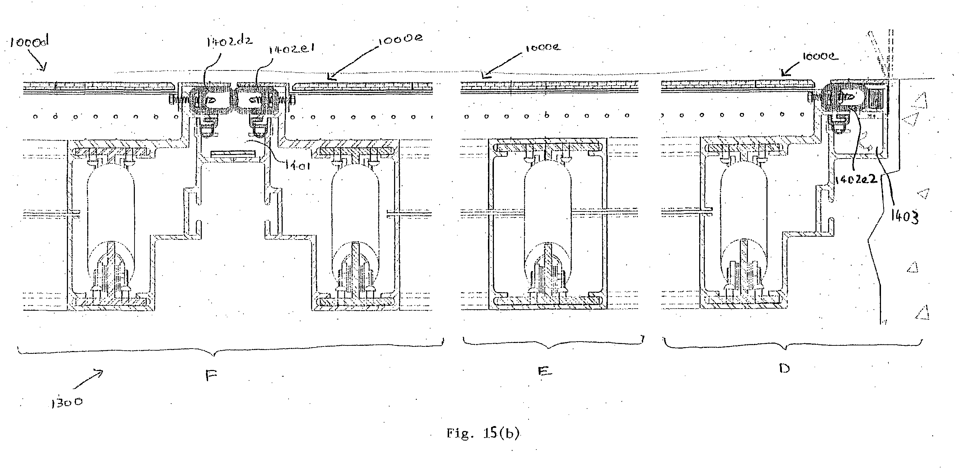

Fig. 15(a) illustrates a cross-sectional view of a part of the floodgate system 1300 whereas Fig. 15(b) illustrates magnified views of parts of the cross-sectional view in Fig. 15(a) (see DETAIL D, DETAIL E, DETAIL F). Similar to the floodgate 100, each floodgate 1000 also comprises a plurality of sealing elements. In the floodgate system 1300, at least one sealing element of each floodgate 1000a - 1000e is configured to overlap with a sealing element of another floodgate 1000a - 1000e such that a continuous barrier is formed by the panels of the floodgates 1000a - 1000e and the overlapping sealing elements. In other words, gaps between the panels of the floodgates 1000a - 1000e are closed by the overlapping sealing elements to form a continuous barrier. An example of this is shown in Fig. 15(b) whereby the sealing element 1402e1 of the floodgate 1000e overlaps with the sealing element 1402d2 of the floodgate 1000d. Furthermore, the sealing element 1402e2 of the floodgate 1000e is configured to press against a wall or a vertical post to form a continuous barrier with the panel of the floodgate 1000e when the floodgate system 1300 is activated. Spaces such as 1401, 1403 provide internal drainage.

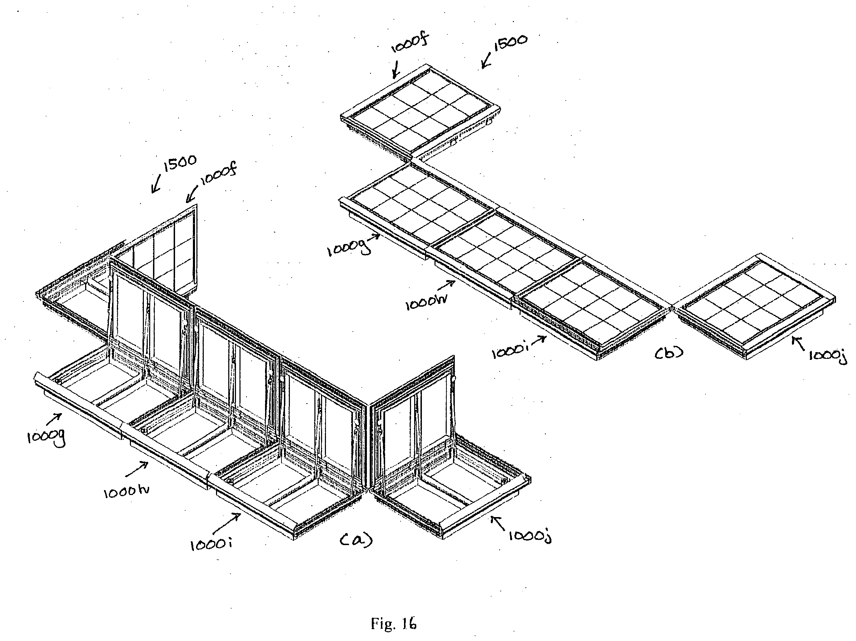

Figs. 16(a) and 16(b) illustrate perspective views of a floodgate system 1500 comprising a plurality of floodgates 1000f- 1000j arranged in a U-shaped manner. Fig. 16(a) illustrates the floodgate system 1500 when the floodgate system 1500 is activated whereas Fig. 16(b) illustrates the floodgate system 1500 when the floodgate system 1500 is deactivated. In the floodgate system 1500, floodgates 1000g, 1000h and 1000i are arranged along a straight line whereas floodgates 1000f and 1000j lie perpendicular to the straight line on opposite sides of the straight line. Similarly, in the floodgate system 1500, at least one sealing element of each floodgate 1000f - 1000j is configured to overlap with a sealing element of another floodgate 1000f - 1000j such that a continuous barrier is formed by the panels of the floodgates 1000f - 1000j and the overlapping sealing elements.

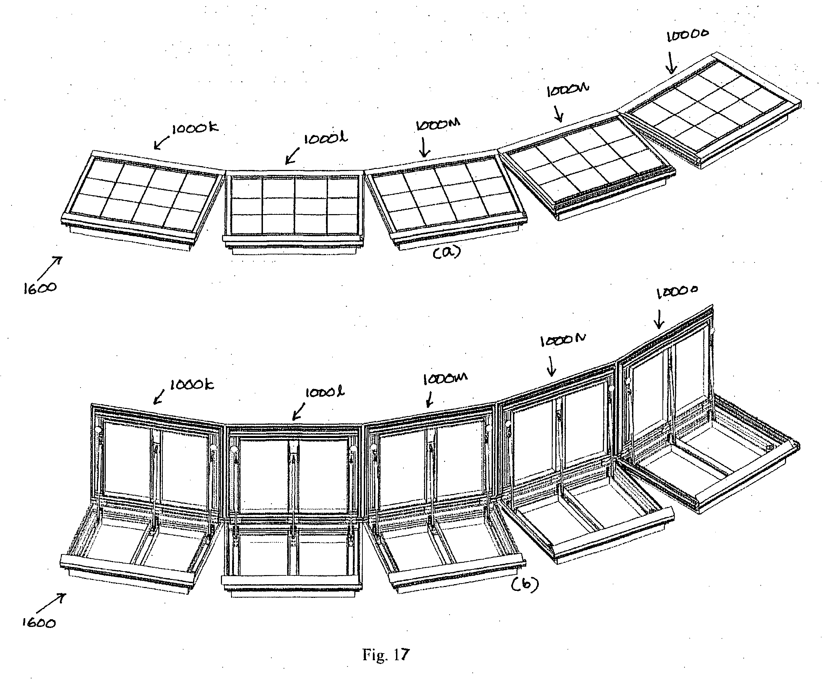

Figs. 17(a) and 17(b) illustrate perspective views of a floodgate system 1600 comprising a plurality of floodgates 1000k - 1000o arranged in a faceted manner. Fig. 17(a) illustrates the floodgate system 1600 when the floodgate system 1600 is deactivated whereas Fig. 17(b) illustrates the floodgate system 1600 when the floodgate system 1600 is activated. In the floodgate system 1600, floodgates 1000k - 1000o are arranged in a faceted manner with an angle between each pair of floodgates 1000k - 1000o being the same. Similarly, in the floodgate system 1600, at least one sealing element of each floodgate 1000k - 1000o is configured to overlap with a sealing element of another floodgate 1000k - 1000o such that a continuous barrier is formed by the panels of the floodgates 1000k - 1000o and the overlapping sealing elements.

The advantages of the floodgates 100, 100b, 1000 in the embodiments of the present invention are as follows:
The floodgates 100, 100b, 1000 in the embodiments of the present invention are activated without using electrical power supply. To activate these floodgates 100, 100b, 1000, it is only necessary to deactivate the locking members in each of these floodgates (i.e. the electromagnetic locks integrated with the tubular drives 202 in the floodgate 100, 100b or the electromagnetic locks 1102 in the floodgate 1000). The panels 102, 102' in these floodgates 100,100b, 1000 will then be moved from the closed position to the opened position by the force exerted by the respective gas struts 104, 104'.

In the floodgates 100, 100b, 1000, gas struts 104, 104' are used for moving the panel 102, 102' from the closed position to the opened position. Unlike hydraulic pumps which require motor pump oil and power supply, gas struts can be operated without the use of electrical power supply. Furthermore, no external air pump is required to operate a gas strut. This is advantageous over pneumatic cylinders which require an external air compressor. In highly humid areas, a large amount of condensate forms in a pneumatic cylinder. The mixture of this condensate with lubrication oil existing in the pneumatic cylinder can often damage the cylinder. Furthermore, pneumatic cylinders employ paper gaskets which may also be damaged by the condensate.

In floodgates 100, 100b, 1000, each gas strut 104, 104' comprises a dampening mechanism which is configured to reduce the rate at which the panel 102, 102' is moved from a predetermined position to the closed position. Thus, the gas struts 104, 104' are able to move the panel 102, 102' gradually but forcefully. Furthermore, in the floodgates 100, 100b, a centrifugal brake is included in the tubular drive 202 and this helps to limit the speed at which the panel 102 moves. This prevents overly abrupt or overly rapid movement of the panel 102, hence preventing damage to the floodgates 100, 100b.

The floodgates 100, 100b, 1000 may be installed beside apertures, openings or doorways such as a single leaf doorway, a double leaf doorway, a main gate of a house, an entrance of a carpark, an entrance to a compound or a doorway between two buildings. These floodgates 100, 100b, 1000 are standalone units and extensive modifications to existing building structures are normally not required. Even though a part of the ground may have to be evacuated to install the floodgates 100, 100b, 1000, the depth required for the floodgates 100, 100b, 1000 is low and thus, the integrity of the building structure will not be affected. Furthermore, the floodgates 100, 100b, 1000 require minimal servicing and maintenance except to ensure their operational readiness.

In addition, a floodgate system can be easily constructed using a plurality of floodgates (100, 100b and/or 1000). As the floodgates 100, 100b or 1000 comprise sealing elements which overlap to close the gaps between the panels of floodgates 100, 100b and/or 1000, a continuous barrier is formed. Hence, no additional barriers (e.g. vertical posts) are required between the panels of the floodgates 100, 100b and/or 1000 to close the gaps when the floodgate system is activated. This achieves a faster setup time for the floodgate system.

Further variations are possible within the scope of the appended claims as will be clear to a skilled reader.

For example, in an embodiment not forming part of the invention, instead of a gas strut, the extendable member may be in the form of a hydraulic pump or a pneumatic pump. However, it is preferable to use a gas strut due to the above-mentioned advantages. In certain embodiments of the invention it is also possible to omit extendable members completely, but if such members are not used to assist in the automatic or assisted opening of the floodgate panel, human intervention will be required to lift the floodgate panel to the opened position, and props will be required to prevent the floodgate panel from closing either by itself or by the force/pressure of the flood water. Note that manually applied props may also used with the embodiments previously described, and the embodiments may be formed with connection elements (e.g. sockets) to receive ends of the props, such that the props are in a configuration (e.g. a sloping "diagonal" configuration) where they hold the floodgate panel in the opened position.

Furthermore, although Figs. 1 to 9 show each floodgate comprising two gas struts, one gas strut may be used or more than two gas struts may be included depending on the force exerted by each gas strut.

Similarly, the number of tubular drives with integrated locking members in the floodgate 100, 100b may be varied. Indeed, the tubular drives may be omitted completely. In this case, however, the floodgate would have to be closed manually, which means that for a given number of available people, who are able to apply a given closing force, the panels can only be up to a certain length (in the direction of the hinge axis). This is because the length cannot be such that the gas struts required to open the floodgate apply a greater force than the one the people can act against to close the floodgate. Furthermore, if the floodgate is too long there is a risk that the people will apply their force at locations which are not evenly spread out along the length, causing the floodgate to be distorted. In other words, the present tubular drives permit the floodgate to be longer, since the wire ropes 312 apply force evenly along the length of the floodgate.

The floodgate 100, 100b, 1000 may also comprise more locking members with the locking members configured to be simultaneously deactivated upon receiving a signal to activate the floodgate. The locking members may not be electromagnetic locks and may be other types of locks. For example, latches or bolts may be used to prevent the floodgate panel from opening when not activated. Furthermore, some of these locking members may be situated at the corners of the panel 102, 102'.

Furthermore, although Figs. 3 - 7, Fig. 10(a) and Figs. 12 - 13 show the floodgate 100, 100b, 1000 as being horizontally installed in the ground, the floodgates 100, 100b, 1000 may also be vertically installed into a wall perpendicular to the ground with the panel 102, 102' being substantially perpendicular to the aperture, opening or doorway of the premise to be protected so that when the panel 102, 102' is in the opened position, it forms a barrier preventing floodwater from entering the aperture, opening or doorway. Alternatively, the floodgate 100, 100b, 1000 may be installed on the surface of a ground using suitable anchors such as masonry/fish-tail anchors and may be covered in sealant such as polysulphide sealant for water tightness. To allow human or vehicular traffic to pass over the floodgate 100, 100b, 1000 when it is installed in this manner, the ground before and after the floodgate 100, 100b, 1000 may be backfilled with concrete and may be sloped.

In addition, some or all of the floodgates 1000a - 1000e, 1000f- 1000j 1000k - 1000o in the floodgate systems 1300, 1500 and 1600 respectively may be replaced with floodgates 100 and/or 100b with the sealing elements configured in the same manner. Alternative floodgate systems may be constructed by arranging the floodgates (100, 100b, 1000 or combinations of them) in different configurations. Furthermore, the panels of the floodgates in a floodgate system may move from their closed positions to their opened positions in different directions. However, regardless of the configuration of the floodgates (100, 100b, 1000 or combinations of them) or the direction in which the panels move, at least one sealing element of each floodgate is configured to overlap with a sealing element of another floodgate such that a continuous barrier is formed by the panels and the overlapping sealing elements.

## Claims

1. A floodgate (100, 100b, 1000, 1000a-1000o) comprising:
a panel (102,102') configured to be movable between an opened position and a closed position wherein in the opened position, the panel forms a barrier against flood water;
at least one hinge (802);
at least one extendable member (104,104') configured to move the panel to the opened position and to exert a sufficient force to move the panel from the closed position to the opened position about the axis of the at least one hinge (802), wherein the extendable member is a gas strut, and
at least one connection means, wherein the gas strut has a first and second end attached to the at least one connection means and the panel, respectively;
**characterised in that** the panel is movable about an axis of the at least one hinge and **in that**
the gas strut is arranged with the panel such that, when the panel is in the closed position, the first end of the gas strut lies directly below a proximal edge of the panel relative to the at least one hinge, and the second end of the gas strut lies directly below a point two-thirds of a length of the panel from the proximal edge of the panel.

2. A floodgate according to claim 1, wherein each extendable member comprises a dampening mechanism configured to reduce the rate at which the extendable member moves the panel from a predetermined position to the closed position.

3. A floodgate according to claim 2, wherein the reduction in the rate at which the extendable member moves the panel is adjustable.

4. A floodgate according to any of the preceding claims, wherein the floodgate is configured such that, when in use, the floodgate is installed into a generally horizontal ground area, the first end of the gas strut lies beneath the axis of the at least one hinge and is laterally spaced away from the axis of the at least one hinge.

5. A floodgate according to any of the preceding claims, further comprising a plurality of hinges (802) attached to the panel and a plurality of brackets (804) attached to the gas struts, the hinges and brackets being maintained in a constant relative positional relationship by a frame, each hinge and bracket being arranged with the panel such that when the panel moves, a weight of the panel exerted on the hinge is at least partially balanced by an opposing force exerted by the bracket.

6. A floodgate according to any of the preceding claims, further comprising at least one locking member configured to be switchable between a locked state and an unlocked state such that when the at least one locking member is in the locked state, the at least one locking member locks the panel in the closed position and when the at least one locking member is in the unlocked state, the panel moves from the closed position to the opened position.

7. A floodgate according to any of the preceding claims, further comprising at least one rotatable drive (202) arranged with the panel such that rotation of the at least one rotatable drive moves the panel from the opened position to the closed position.

8. A floodgate according to claim 7 when dependent on claim 6, wherein each locking member is integrally formed with one of the at least one rotatable drive.

9. A floodgate according to claim 7 or 8 wherein each rotatable drive further comprises a brake configured to exert a force against the rotation of the rotatable drive when a speed of the rotation exceeds a predetermined threshold.

10. A floodgate according to any of the preceding claims, further comprising a base frame (108) arranged to hold the panel and a seal (310a, 310b, 310c, 310d) arranged to press against the base frame when the panel is in the opened position to form a continuous barrier with the panel against floodwater.

11. A floodgate according to any of the preceding claims, wherein the panel is configured to withstand a weight of an automobile over the panel when the panel is in the closed position.

12. A floodgate according to any of claims 7 to 11, wherein each rotatable drive is configured to exert a force on the panel to move the panel from the opened position to the closed position wherein the force exerted by each rotatable drive at a point a distance away from a first end of the panel is equal to the force exerted by a different rotatable drive at a point the same distance away from a second end of the panel opposite the first end.

## Patentansprüche

1. Hochwasserschutztor (100, 100b, 1000, 1000a- 1000o), das Folgendes umfasst:
eine Platte (102, 102'), die dafür konfiguriert ist, um zwischen einer geöffneten Stellung und einer geschlossenen Stellung beweglich zu sein, wobei die Platte in der geöffneten Stellung eine Sperre gegen Hochwasser bildet,
mindestens ein Scharnier (802),
mindestens ein ausfahrbares Element (104, 104'), das dafür konfiguriert ist, die Platte zu der geöffneten Stellung zu bewegen und eine ausreichende Kraft auszuüben, um die Platte um die Achse des mindestens einen Scharniers (802) von der geschlossenen Stellung zu der geöffneten Stellung zu bewegen, wobei das ausfahrbare Element eine Gasdruckstrebe ist, und
mindestens ein Verbindungsmittel, wobei die Gasdruckstrebe ein erstes und ein zweites Ende aufweist, die jeweils mit dem mindestens einen Verbindungsmittel beziehungsweise der Platte verbunden sind,
**dadurch gekennzeichnet, dass** die Platte um eine Achse des mindestens einen Scharniers beweglich ist, und dadurch, dass die Gasdruckstrebe derart mit der Platte angeordnet ist, dass, wenn sich die Platte in der geschlossenen Stellung befindet, das erste Ende der Gasdruckstrebe unmittelbar unterhalb einer proximalen Kante der Platte im Verhältnis zu dem mindestens einen Scharnier liegt und das zweite Ende der Gasdruckstrebe unmittelbar unterhalb eines Punktes liegt, der zwei Drittel einer Länge der Platte von der proximalen Kante der Platte entspricht.

2. Hochwasserschutztor nach Anspruch 1, wobei jedes ausfahrbare Element einen Dämpfungsmechanismus umfasst, der dafür konfiguriert ist, die Geschwindigkeit zu verringern, mit der das ausfahrbare Element die Platte von einer vorbestimmten Stellung zu der geschlossenen Stellung bewegt.

3. Hochwasserschutztor nach Anspruch 2, wobei die Verringerung der Geschwindigkeit, mit der das ausfahrbare Element die Platte bewegt, einstellbar ist.

4. Hochwasserschutztor nach einem der vorhergehenden Ansprüche, wobei das Hochwasserschutztor derart konfiguriert ist, dass, bei Benutzung, das Hochwasserschutztor in eine im Allgemeinen horizontale Bodenfläche eingebaut ist, das erste Ende der Gasdruckstrebe unterhalb der Achse des mindestens einen Scharniers liegt und seitlich von der Achse des mindestens einen Scharniers beabstandet ist.

5. Hochwasserschutztor nach einem der vorhergehenden Ansprüche, das ferner mehrere Scharniere (802), die an der Platte befestigt sind, und mehrere Stützen (804), die an den Gasdruckstreben befestigt sind, umfasst, wobei die Scharniere und die Stützen durch ein Gerüst in einer konstanten relativen Positionsbeziehung gehalten werden, wobei jedes Scharnier und jede Stütze mit der Platte derart angeordnet ist, dass, wenn sich die Platte bewegt, ein Gewicht der Platte, das auf das Scharnier ausgeübt wird, mindestens teilweise durch eine entgegengesetzte Kraft ausgeglichen wird, die durch die Stütze ausgeübt wird.

6. Hochwasserschutztor nach einem der vorhergehenden Ansprüche, das ferner mindestens ein Verriegelungselement umfasst, das dafür konfiguriert ist, um umschaltbar zwischen einem verriegelten Zustand und einem entriegelten Zustand zu sein, so dass, wenn sich das mindestens eine Verriegelungselement in dem verriegelten Zustand befindet, das mindestens eine Verriegelungselement die Platte in der geschlossenen Stellung verriegelt, und wenn sich das mindestens eine Verriegelungselement in dem entriegelten Zustand befindet, sich die Platte von der geschlossenen Stellung zu der geöffneten Stellung bewegt.

7. Hochwasserschutztor nach einem der vorhergehenden Ansprüche, das ferner mindestens einen drehbaren Antrieb (202) umfasst, der derart mit der Platte angeordnet ist, dass eine Drehung des mindestens einen drehbaren Antriebs die Platte von der geöffneten Stellung zu der geschlossenen Stellung bewegt.

8. Hochwasserschutztor nach Anspruch 7, wenn abhängig von Anspruch 6, wobei jedes Verriegelungselement integral mit einem von dem mindestens einen drehbaren Antrieb geformt ist.

9. Hochwasserschutztor nach Anspruch 7 oder 8, wobei jeder drehbare Antrieb ferner eine Bremse umfasst, die dafür konfiguriert ist, eine Kraft gegen die Drehung des drehbaren Antriebs auszuüben, wenn die Geschwindigkeit der Drehung einen vorbestimmten Schwellenwert überschreitet.

10. Hochwasserschutztor nach einem der vorhergehenden Ansprüche, das ferner ein Grundgerüst (108), das dafür angeordnet ist, die Platte zu halten, und eine Dichtung (310a, 310b, 310c, 310d), die dafür angeordnet ist, gegen das Grundgerüst zu pressen, wenn sich die Platte in der geöffneten Stellung befindet, um mit der Platte eine durchgehende Sperre gegen Hochwasser zu bilden, umfasst.

11. Hochwasserschutztor nach einem der vorhergehenden Ansprüche, wobei die Platte dafür konfiguriert ist, einem Gewicht eines Automobils über der Platte zu widerstehen, wenn sich die Platte in der geschlossenen Stellung befindet.

12. Hochwasserschutztor nach einem der Ansprüche 7 bis 11, wobei jeder drehbare Antrieb dafür konfiguriert ist, eine Kraft auf die Platte auszuüben, um die Platte von der geöffneten Stellung zu der geschlossenen Stellung zu bewegen, wobei die Kraft, die durch jeden drehbaren Antrieb an einem Punkt, eine Strecke entfernt von einem ersten Ende der Platte, ausgeübt wird, gleich der Kraft ist, die durch einen anderen drehbaren Antrieb an einem Punkt, die gleiche Strecke entfernt von einem zweiten Ende der Platte, das dem ersten Ende entgegengesetzt ist, ausgeübt wird.

## Revendications

1. Porte d'écluse (100, 100b, 1000, 1000a-1000o), comprenant :
un panneau (102, 102') configuré pour pouvoir être déplacé entre une position ouverte et une position fermée, dans laquelle, dans la position ouverte, le panneau forme une barrière contre les eaux de crue ;
au moins une charnière (802) ;
au moins un élément extensible (104, 104') configuré pour déplacer le panneau vers la position ouverte et pour exercer une force suffisante pour déplacer le panneau de la position fermée vers la position ouverte autour de l'axe de la au moins une charnière (802), l'élément extensible étant un vérin à gaz ; et
au moins un moyen de connexion, dans laquelle le vérin à gaz comporte des première et deuxième extrémités fixées respectivement sur le au moins un moyen de connexion et sur le panneau ;
**caractérisée en ce que** le panneau peut être déplacé autour d'un axe de la au moins une charnière, et **en ce que** le vérin à gaz est agencé avec le panneau de sorte que lorsque le panneau se trouve dans la position fermée, la première extrémité du vérin à gaz se situe directement au-dessous d'un bord proximal du panneau par rapport à la au moins une charnière, et la deuxième extrémité du vérin à gaz se situe directement au-dessous d'un point correspondant aux deux tiers d'une longueur du panneau à partir du bord proximal du panneau.

2. Porte d'écluse selon la revendication 1, dans laquelle chaque élément extensible comprend un mécanisme d'amortissement configuré pour réduire la vitesse à laquelle l'élément extensible déplace de panneau d'une position prédéterminée vers la position fermée.

3. Porte d'écluse selon la revendication 2, dans laquelle la réduction de la vitesse à laquelle l'élément extensible déplace le panneau peut être ajustée.

4. Porte d'écluse selon l'une quelconque des revendications précédentes, dans laquelle la porte d'écluse est configurée de sorte qu'en service, lorsque la porte d'écluse est installée dans une surface du sol généralement horizontale, la première extrémité du vérin à gaz se situant au-dessous de l'axe de la au moins une charnière et étant espacée latéralement de l'axe de la au moins une charnière.

5. Porte d'écluse selon l'une quelconque des revendications précédentes, comprenant en outre plusieurs charnières (802) fixées sur le panneau et plusieurs consoles (804) fixées sur les vérins à gaz, les charnières et les consoles étant maintenues dans une relation de position relative constante par un cadre, chaque charnière et chaque console étant agencée avec le panneau de sorte que lors du déplacement du panneau, un poids du panneau, exercé sur la charnière, est au moins en partie équilibré par une force opposée exercée par la console.

6. Porte d'écluse selon l'une quelconque des revendications précédentes, comprenant en outre au moins un élément de verrouillage configuré pour pouvoir être commuté entre un état verrouillé et un état déverrouillé, de sorte que lorsque le au moins un élément de verrouillage se trouve dans l'état verrouillé, le au moins un élément de verrouillage verrouille le panneau dans la position fermée, et lorsque le au moins un élément de verrouillage se trouve dans l'état déverrouillé, le panneau se déplace de la position fermée vers la position ouverte.

7. Porte d'écluse selon l'une quelconque des revendications précédentes, comprenant en outre au moins un entraînement rotatif (202) agencé avec le panneau de sorte que la rotation du au moins un entraînement rotatif déplace le panneau de la position ouverte vers la position fermée.

8. Porte d'écluse selon la revendication 7, dépendante de la revendication 6, dans laquelle chaque élément de verrouillage est formé d'une seule pièce avec l'un du au moins un entraînement rotatif.

9. Porte d'écluse selon les revendications 7 ou 8, dans laquelle chaque entraînement rotatif comprend en outre un frein configuré pour exercer une force contre la rotation de l'entraînement rotatif lorsqu'une vitesse de rotation dépasse un seuil prédéterminé.

10. Porte d'écluse selon l'une quelconque des revendications précédentes, comprenant en outre un cadre de base (108) configuré pour retenir le panneau, et un joint d'étanchéité (310a, 310b, 310c, 310d) configuré pour exercer une pression contre le cadre de base lorsque le panneau se trouve dans la position ouverte afin de former avec le panneau une barrière continue contre les eaux de crue.

11. Porte d'écluse selon l'une quelconque des revendications précédentes, dans laquelle le panneau est configuré pour résister à un poids d'une automobile sur le panneau lorsque le panneau se trouve dans la position fermée.

12. Porte d'écluse selon l'une quelconque des revendications 7 à 11, dans laquelle chaque entraînement rotatif est configuré pour exercer une force sur le panneau afin de déplacer le panneau de la position ouverte vers la position fermée, la force exercée par chaque entraînement rotatif au niveau d'un point situé à une certaine distance d'écart d'une première extrémité du panneau étant égale à la force exercée par un entraînement rotatif différent au niveau d'un point situé à la même distance d'écart d'une deuxième extrémité du panneau, opposée à la première extrémité.
